Europäisches Patentamt

European Patent Office

Office européen des brevets

(19)

(11) Publication number: **0 459 967 A2**

# (12) EUROPEAN PATENT APPLICATION

(21) Application number: **91870078.2**

(22) Date of filing: **14.05.91**

(51) Int. Cl.⁵: **C08J 3/205, C08J 3/22,** // (C08L101/00, 29:14)

(30) Priority: 17.05.90 US 524419
17.05.90 US 524518

(43) Date of publication of application:
04.12.91 Bulletin 91/49

(84) Designated Contracting States:
AT BE CH DE DK ES FR GB GR IT LI LU NL SE

(71) Applicant: **MONSANTO COMPANY**
800 North Lindbergh Boulevard
St. Louis Missouri 63167 (US)

(72) Inventor: **Chang, Tai Ming**
50 Canterbury Lane
Longmeadow, Massachusetts 01106 (US)
Inventor: **Reisman, Abraham Joseph**
51 Emerson Street
Springfield, Massachusetts 01118 (US)

(74) Representative: **Ernst, Hubert et al**
Monsanto Services International S.A., Patent
Department, Avenue de Tervuren 270-272,
Letter Box No. 21
B-1150 Brussels (BE)

(54) Pigmented dispersion and its use in colored thermoplastic resin sheet.

(57)    A dispersion of pigment colorant particles in a plasticizer, preferably for polyvinyl butyral (PVB) resin, exposed to a level of ultrasonic energy sufficient to provide a predetermined light transmission and a mean pigment particle size less than 1 micron, the concentration of particles in the dispersion being less than required to obtain such transmission without exposure to ultrasonic energy. A process improving the color consistency of such a dispersion involves subjecting it to ultrasonic energy sufficient to maximize the chroma of the dispersion in that the chroma "a" or chroma "b" value of the treated dispersion does not change by more than one unit with further ultrasonic treatment. Also, colored, transparent, plasticized synthetic thermoplastic resin sheet, preferably polyvinyl butyral, and a process for its preparation which involves subjecting a dispersion of resin plasticizer and pigment colorants to a level of ultrasonic energy providing a chroma value in a laminate of said sheet with glass at between about 2 to 86 percent light transmission at a pigment concentration in the sheet which is less than the pigment concentration to provide such chroma value in a comparison laminate with glass wherein the sheet in the comparison laminate contained mechanically sheared pigment particles which had not been ultrasonically treated. Sheet color consistency is improved in that the ultrasonic exposure maximizes color strength (chroma), the chroma "a" or chroma "b" component of the treated dispersion not changing by more than one unit with further ultrasonic treatment.

EP 0 459 967 A2

Ultrasonic Exposure vs. Particle Size

FIG. 1

BACKGROUND OF THE INVENTION

This invention relates to pigment particles dispersed in a liquid and more particularly to such a dispersion wherein the particles are colored pigments, the liquid is plasticizer for polyvinyl butyral (PVB) resin, as well, and to sheet formed therefrom.

Plasticized thermoplastic interlayer sheet, such as of polyvinyl butyral ("PVB sheet") is widely used in laminates with one or more layers of glass or other glazing material to absorb impact energy in window applications such as used in commercial and residential buildings, vehicles such as automobiles, aircraft, ships, trains, intrusion security applications and the like. Windows and casings in these laminates (and therefore the PVB sheet thereof) must be sufficiently transparent so the eye of a particular observer looking through the panel can comfortably discern objects, printed matter and the like beyond the laminate. In this regard, haze reducing transparency should be minimized.

Dyes and pigments fully or partially coloring interlayer PVB sheet are likewise known (see, for example U.S. Nos. 3,354,025 and 4,316,868). A fully colored sheet in a laminated window of a commercial building presents an aesthetically desirable appearance. A colored gradient band decreasing in intensity in the upper margin of a clear sheet in an automobile windshield absorbs light and reduces undesirable glare on front seat passengers.

Colored pigments in interlayer sheet have advantages over dyes. For example, pigments are more stable to ultraviolet light and therefore do not deteriorate so rapidly in window applications. Pigments are more thermally stable and survive elevated temperature without changing color when recycled many times as trim scrap by a sheet manufacturer. Dyes are usually initially dissolved in solvents which if toxic require special handling and, after application to the sheet, the solvent must be removed by evaporation. Solvents are avoided with pigments.

On the other hand, pigments in interlayer PVB sheet are not without deficiencies. Pigments are particulate structures much larger (typically 100 times) than the molecular size of dye molecules. While dyes are soluble in the sheet resin, pigments are not and are present as dispersed particles which can contribute to haze in the sheet which, as noted, should be minimized in laminated safety glass window applications. Moreover, pigmented sheet color can vary depending on the size and dispersion of the particles in the sheet which is very undesirable to customers wishing to match visual sheet color with a standard in successive orders. If pigment size is not minimal or is not well dispersed in the sheet, changes in refractive index occur across the sheet to cause light scattering and undesirable haze discernible to the eye particularly with bright colors.

It is further generally known (see U.S. 4,071,225) to use ultrasonics to facilitate dispersing solids in liquids during mixing.

SUMMARY OF THE INVENTION

How, unexpected improvements have been developed in using pigment colorants in synthetic thermoplastic sheet for laminated safety glass window applications.

Accordingly, a principal object of this invention is to provide an improved dispersion of colored pigments in plasticizer.

Another object is to reduce haze and improve the color consistency of pigment/plasticizer dispersions.

A specific object is to reduce the amount of pigment required to provide a particular color in a dispersion to be used in colored, plasticized, PVB resin sheet.

A further object is to provide synthetic, thermoplastic sheet, such as of polyvinyl butyral, having the aforementioned improvements in haze and color consistency.

A further object is to provide process improvements for pigment coloring of clear PVB resin and sheet.

Other objects of this invention will in part be obvious and will in part appear from the following description and claims.

These and other objects are accomplished by providing a dispersion of pigment colorant particles in a plasticizer for PVB resin, such dispersion having been exposed to a level of ultrasonic energy sufficient to provide a) a predetermined light transmission and b) a mean pigment particle size less than one micron, the concentration of pigment particles in the dispersion being less than the concentration required to obtain said transmission without exposure to ultrasonic energy.

Further provided is a process for improving the color consistency of a dispersion of pigment colorant particles in a plasticizer which comprises subjecting a dispersion of color pigment particles in a plasticizer for polyvinyl butyral resin to a level of ultrasonic energy sufficient to maximize the chroma of the dispersion in that the chroma "a" or chroma "b" value (hereinafter defined) of the treated dispersion does not change by more than one unit with further ultrasonic treatment.

3

Further provided is colored, transparent, synthetic thermoplastic resin sheet, preferably polyvinyl butyral, containing plasticizer and dispersed pigment particles having a mean particle size less than one micron, such particles having been exposed to a level of ultrasonic energy sufficient to provide a chroma value in a laminate of such sheet with glass at between about 2 to 86% light transmission at a pigment concentration in the sheet which is less than the pigment concentration to provide such chroma value in a laminate with glass of plasticized thermoplastic resin sheet containing mechanically sheared pigment particles which had not been ultrasonically treated.

Further provided in a process for forming transparent, plasticized, synthetic thermoplastic resin (e.g. polyvinyl butyral) sheet containing colored pigment which comprises dispersing the pigment in plasticizer, mixing the plasticizer and dispersed pigment with the resin to form a sheet formulation and melt shaping the formulation into the sheet, is the combination therewith of the step of subjecting the dispersion of plasticizer and pigment to a level of ultrasonic energy capable of providing a predetermined light transmission at a pigment concentration which is less than the concentration of the same pigment to obtain such transmission through a similar dispersion except that the pigment and plasticizer had not been exposed to ultrasonic energy.

Further provided in the preparation of plasticized polyvinyl butyral sheet wherein one or more plasticizers, one or more pigment colorants and polyvinyl butyral resin are mixed and melt shaped into a fully or partially colored sheet, is a method for improving the color consistency of the sheet which comprises subjecting a dispersion of the pigment colorants and plasticizer to be used in such sheet to a level of ultrasonic energy sufficient to maximize the chroma of the dispersion in that the chroma "a" or chroma "b" value of the treated dispersion does not change by more than one unit with further ultrasonic treatment.

## BRIEF DESCRIPTION OF THE DRAWINGS

In describing the overall invention, reference will be made to the accompanying drawings wherein:

Figs 1-4 and 6-8 are graphical illustrations of relationships and improved properties obtained according to the embodiment of the Example; and

Fig. 5 in a three-dimensional plot illustrating the measurement of color as interpreted according to the invention.

## DETAILED DESCRIPTION OF THE INVENTION

The improvements in using pigment colorants in transparent, plasticized, synthetic thermoplastic polymers, such as polyvinyl butyral, for safety glazings in window applications is achieved by exposing the pigment particles in a medium of one or more polymer plasticizers to sufficient ultrasonic energy to provide unexpected performance results when the treated pigment/plasticizer dispersion is incorporated into the polymer and shaped into interlayer sheeting and laminated with glass. By extending the exposure time beyond that merely adequate to reduce the particles to submicron size, the efficiency of polymer coloring is dramatically improved insofar as improving both the lot to lot consistency of a particular colored plastic as well as its color strength, the latter to be further defined herein. With such improved efficiency the pigment loading or concentration to provide a particular level of light\transmission through a transparent interlayer sheet colored with the treated pigment is reduced from the concentration providing the same transmission with untreated pigment, thereby importantly improving (by reducing) haze in the sheet which is so important in window applications. Significant manufacturing advantages are achieved insofar as providing a dispersion and interlayer sheet capable of meeting tighter color specifications with attendant diminution of off-grade product while providing consistent product color and using less pigment to achieve a given color strength.

Pigments which may be employed in the practice of the invention, are those for coloring thermoplastic polymers which provide good transparency. In general, these pigments constitute discrete particles which may be inorganic, organic or organometallic~ Typical pigments are titanium dioxide, carbon black, phthalocyanine blue, ultramarine blue, medium chrome green, dark chrome green, phthalocyanine blue and green, cadmium red, molybdate orange, medium chrome yellow, light chrome yellow, alizarinemaroon, quinacridone maroons, reds and scarlets, beta-oxynapthioc reds and maroons, anthraquinone types including flavanthrone, anthanthrone and indanthrone derivatives, perinone and perylene pigments, thio-indigo pigments, hansa yellows including benzidene derivatives, azo yellows including nickel complex-azo yellow, burnt umber (oxide brown), ferrite yellow (oxide yellow), oxide red and the like.

Usable transparent synthetic thermoplastic resin polymers must be capable of being melt processed into interlayer sheet, of heat lamination of the sheet to glass (or like panels) to form safety glazings and functioning therein to absorb impact energy. Representative transparent polymers included poly (ethylene-vinyl acetate), poly (ethylene-vinyl acetate-vinyl alcohol), poly (ethylene-methyl methacrylate-acrylic acid), polyurethane, polyvinyl acetal such as polyvinyl butyral etc. The preferred polymer is partial polyvinyl butyral (PVB) which contains 65-95 weight percent vinyl butyral units, 15 to 25 weight percent hydroxyl groups calculated as vinyl alcohol whose function is to adhere the polymer to glass and 0 to 5 weight percent vinyl ester units (calculated as vinyl acetate).

Plasticizer in the invention serves i) as a liquid medium in which the pigment colorants are dispersed to facilitate their exposure to ultrasonic energy and ii) the conventional function of reducing the glass transition temperature of the transparent, synthetic, thermoplastic polymer to a range rendering it useful as an elastomer for impact dissipation in laminated safety glazings. The amount of plasticizer used with the resin in forming the interlayer sheet depends on the polymer used. With PVB, about 20 to 80 parts plasticizer per 100 parts PVB resin and more commonly 25 to 45 parts. Plasticizers, including mixtures thereof, commonly employed are esters of a polybasic acid and a polyhydric alcohol. Particularly suitable plasticizers are triethylene glycol di-(2-ethylbutyrate), dihexyl adipate, dioctyl adipate, mixtures of heptyl and nonyl adipates, dibutyl sebacate, polymeric plasticizers such as oil-modified sebacic alkyds, and mixtures of phosphates and adipates as disclosed in U.S. No. 3,841,890 and adipates and alkyl benzyl phthalates as disclosed in U.S. No. 4,144,217. Other suitable plasticizers are well known or will be obvious to those skilled in the art. $C_6$ - $C_8$ adipate esters such as hexyl adipate are preferred.

The ultrasonic energy imparted to the pigment particles of the pigment/plasticizer dispersion mixture can be delivered by any system capable of applying ultrasonic longitudinal pressure oscillations sufficient to achieve the performance results of the invention. The amount of ultrasonic energy input to the dispersion being treated depends on the frequency of the ultrasonic vibrator and can be from about 10 to 40 K-hertz, preferably 16-20 K-hertz. Choice of a particular apparatus system to deliver the energy can vary; the most energy efficient is preferred. An ultrasonic system called Reverbatory Ultrasonic Mixer (RUM) commercially available from Lewis Corporation, Oxford, Conn. 06483 has been successfully used. This system is described in U.S. 4,071,225, col. 3, line 64 et seq, the content of which is incorporated herein by reference. Briefly, the dispersion being processed is repeatedly passed, preferably at ambient temperature, between two opposing, closely spaced, laterally adjustable (from about 0.1 to 30 mm) ultrasonically vibrating, perfectly flat, rectangular diaphragms, until the desired level of energy has been delivered. An incident wave train emanating from one ultrasonically vibrating diaphragm loses hardly any intensity before reaching the very close opposite diaphragm from which it is reflected. This is called a "near field" system. Since the opposing diaphragm is similarly vibrating the almost negligible intensity loss is halved and a three-dimensional, isotropic sound field of homogeneous intensity results. The transmitted sound intensity per unit volume of processed dispersion increases hyperbolically with decreasing distance between the opposing diaphragms. Such a system desirably provides very high ultrasonic intensities per unit volume without increasing input intensity per unit area, making treatment economical with dispersions of relatively high pigment concentrations and plasticizer viscosities.

The concentration of pigment particles in the plasticizer vehicle forming the dispersion being ultrasonically treated is tailored to accommodate the treatment system chosen and will vary with plasticizer, the nature of the pigments selected and the light transmission and desired color in the finished laminated glazing product. Generally the dispersion should not be so viscous as to be difficult to handle (e.g. resisting flow) in the treatment system or so dilute as to prolong exposure time unnecessarily. For most pigments and PVB resin plasticizers pigment concentration in the dispersion being treated is between about 0.1 to about 9, preferably about 0.1 to 3% by weight based on the weight of pigment and plasticizer.

Ultrasonic energy required varies with the particle size of the pigment(s), efficiency of the treatment system and the solids content of the dispersion. At the solids concentrations noted above, the energy input to the dispersion to achieve the improved coloring of the invention is at least about 0.04 watt-hr per cubic centimeter of dispersion at 16 to 40 K-Hz frequency. Using the RUM treatment system described above or equivalent at least about 0.07 watt-hr are required at 16-20 K-Hz per cc of dispersion of about 0.1 to 3.0 weight % solid pigment colorants in liquid plasticizer, such as dihexyl adipate.

In a preferred embodiment, before ultrasonic exposure pigment particles dispersed in plasticizer are reduced to submicron size by multiple pass flow through a grinding mill.

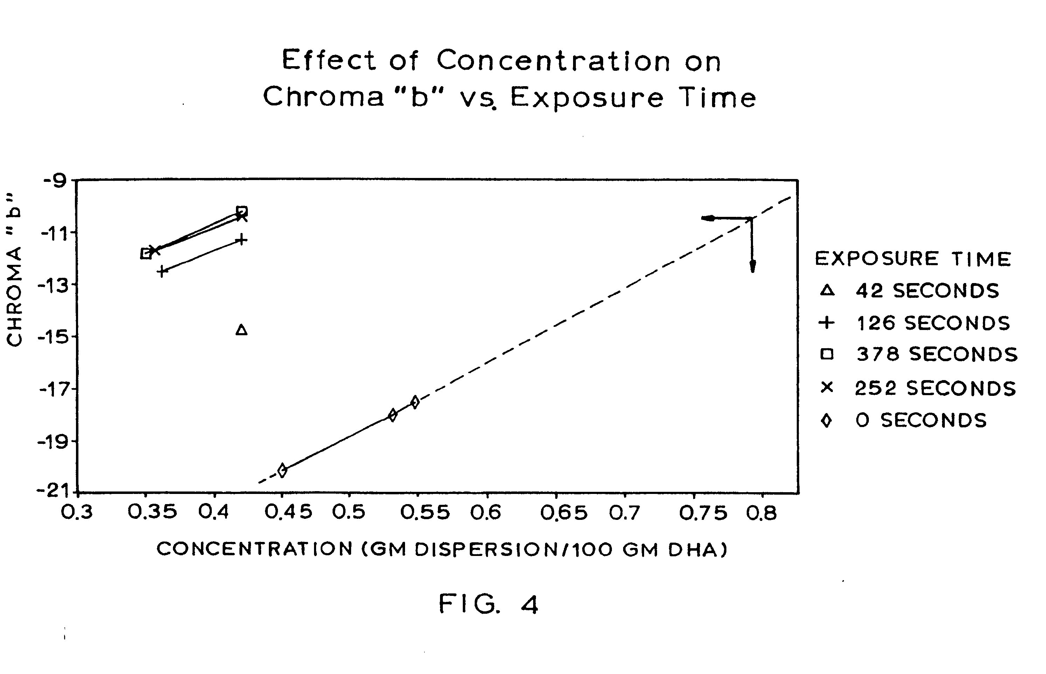

After ultrasonic treatment of the dispersion of pigment colorant particles in plasticizer, the treated composition is mixed with resin and melt shaped into fully or partially colored sheet of about 5 to 50 mils (0.13-1.3 mm) preferably 10 to 30 mils (0.25 - 0.76mm) thickness according to procedures known to those skilled in the art. Mixing the dispersion and resin (and optional additional property enhancing additives) to provide a sheet formulation is typically done in a conventional high intensity mixer. Melt mixing and shaping of the mixed formulation is by extrusion, i.e. by forcing melted plasticized, pigmented polymer melt through a sheeting die having a horizontally long vertically narrow slot opening substantially conforming in length and height to that of the sheet being formed, or by casting molten polymer issuing from an extrusion die onto a specially prepared surface of a die roll at the die exit to impart desired surface characteristics to one side of the molten polymer. When the roll surface has minute peaks and valleys, the sheet formed will have a rough surface on the side contacting the roll generally conforming respectively to such valley and peaks. A rough surface on the other side can be provided by the design of the extrudate die opening. Such a die opening is shown in Fig. 4 of U.S. No. 4,281,980. Alternative known techniques of producing a rough surface on one or both sides of an extruding sheet involve the specification and control of one or more of the following: polymer molecular weight distribution, water content and temperature of the surface(s) of the melt passing through the die opening. Such techniques are disclosed in U.S. Nos. 2,904,844; 2,909,810; 3,994,654; 4,575,540 and European Patent No. 0185,863. As is known, this rough surface on the interlayer is temporary to facilitate deairing during laminating after which it is melted smooth by the elevated temperature and pressure associated with autoclave laminating.

The colored transparent synthetic thermoplastic sheet containing the treated pigment(s) may be either fully colored or partially colored, i.e. part of the sheet is unpigmented. Fully colored sheet is typically used in commercial or residential windows while the preferred form of partially colored sheet comprises a band of colored pigmented polymer extending along one margin adjacent the edge gradually decreasing in color intensity away from the edge toward the center of the uncolored, clear sheet region. Such gradient colored band is conventional along the upper margin of a windshield safety glazing. Systems for incorporating a sidestream of pigmented plastic melt into a main stream of uncolored melt and then extruding the combined streams through a slot die to form the preferred form of partially colored sheet are disclosed in U.S. Nos. 3,405,425 and 4,316,868, the content of the latter patent being incorporated herein by reference.

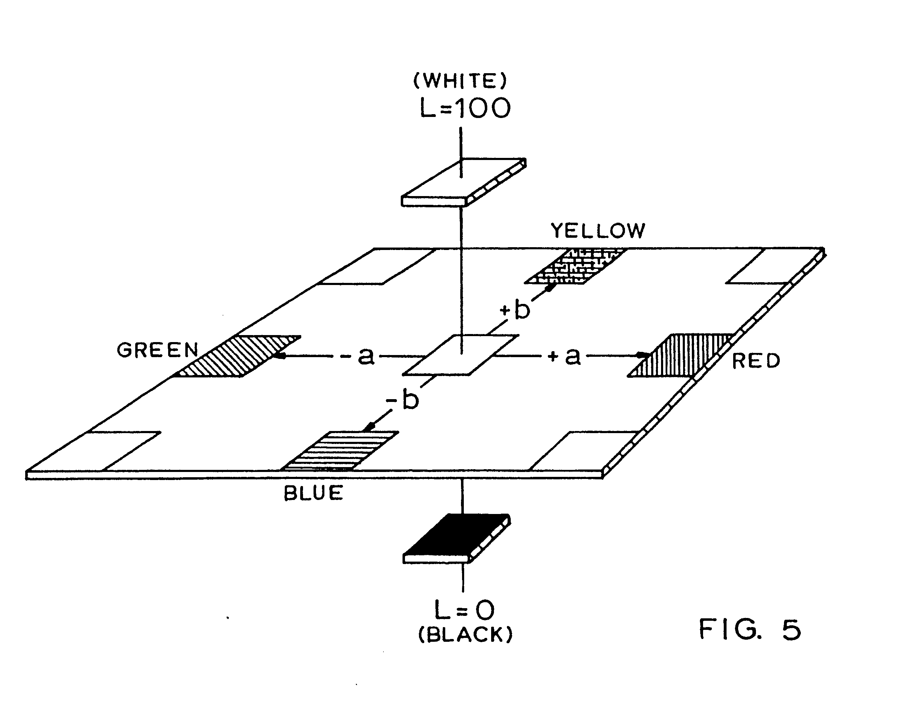

The effect of the ultrasonic treatment of the invention on color can be characterized by reference to the Munsell System standard for describing any color in terms of coordinates on a three dimensional (x-y-z) graph. These coordinates correspond to three variables: hue, which is the quality of color described by the words red, yellow, green, blue etc; value, which is the quality by which a particular color can be classified as equivalent in lightness to some member of a series of gray samples ranging from white to black; and chroma which is the quality of color that describes the degree of difference between a color (which is itself not a white, gray or black) and a gray of the same value or lightness. Referring, to Fig. 5, the vertical position of the depicted plane along the y-axis establishes for a particular color sample its Munsell lightness "value" whereas the "a" and "b" horizontal coordinates within that plane of constant lightness value identify the Munsell "chroma" for the particular sample. Chroma, then, call be considered a measure of color strength or depth with-the objective of the invention being to provide maximum color strength for a given amount of pigment. Chroma "a" and "b" values as used herein are to be interpreted in this context. This system is more completely described in "Principles Of Color Technology", 2nd Edition, Fred W. Billmeyer, Jr., Max Saltzman, ©1981 by John Wiley and Sons, Inc.

The design level of light transmission through a laminated safety glass structure containing colored, pigmented interlayer sheet varies with the color and end-use application. Considering all applications, such light transmission broadly is between about 2 to 86%, such value constituting the average of twenty transmissions over the 380-750 mm spectrum as measured by commercial laboratory instruments. Typically, in the darkest region of gradient bands in windshields light transmission is about 2 to 40%, typically 2-10% for the bluish-green version frequently used in U.S. vehicles. Transmissions for architectural applications will generally be greater and typically range form 6 to 86%, transmission through a laminate of uncolored sheet between two layers of clear glass being about 88 to 92%.

In contrast to laminate performance light transmission described above, light transmission of the pigment dispersion form of the invention is intended herein to be an analytical technique to characterize ultrasonic treatment efficiency. Thus, the term "predetermined light transmission" of a dispersion treated according to the invention represents a light transmission standard for a particular pigment concentration for comparison with the concentration of pigment in an untreated dispersion required to provide that predetermined value. When measuring dispersion light transmission, to obtain meaningful measurements the dispersion is diluted with further plasticizer from the pigment concentration used during treatment which is typically too concentrated at 0.5 - 38. Dispersion light transmissions, then, as measured herein and presented in the Example are at the pigment concentration actually subjected to ultrasonic treatment per 100 gm of plasticizer. In addition to plasticizer and pigments, interlayers according to the invention may contain other additives such as ultraviolet light stabilizers, antioxidants, glass adhesion control salts and the like.

The following example is exemplary of the invention wherein parts and percentages are by weight unless otherwise indicated.

## EXAMPLE

A dispersion of solid pigment colorants in liquid dihexyl adipate (DHA) plasticizer (20% solids) was prepared to match the bluish-green color of a gradient band in a plasticized PVB sheet commercially available from Monsanto Company in which dyes had been used to provide the color. Pigment colorant amounts in DHA were:

| Pigment | Concentration |
| --- | --- |
| | (parts/100 parts DHA+PVB) |
| Hostaperm Red[1] | 0.0040 |
| Cromaphtol Yellow[2] | 0.0014 |
| Heliogen Blue[3] | 0.0420 |
| Carbon Black[4] | 0.0182 |

## Source:

[1]American Hoechst Corp.

[2]Ciba Geigy

[3]BASF

[4]Columbia Chemicals Company

The DHA and pigments were mixed in an agitated vessel at ambient temperature for about two hours to uniformly disperse the pigment colorants in the DHA. This dispersion was then cycled continuously through a media bead mill until the particle size of the pigments in the dispersion did not change further with additional cycling. Such a grinding mill comprises a shaft carrying eccentrically mounted discs turning at 1800 rpm in a housing containing loose ceramic grinding beads. Mean size distribution was measured using a low angle laser beam light scattering Leeds and Northrup Model 7997 instrument.

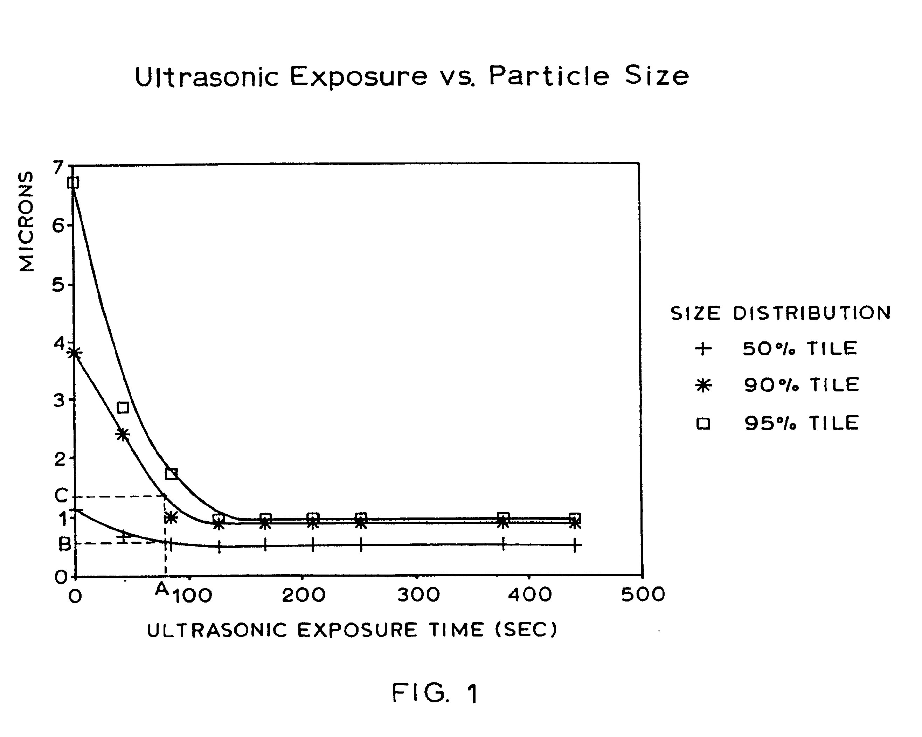

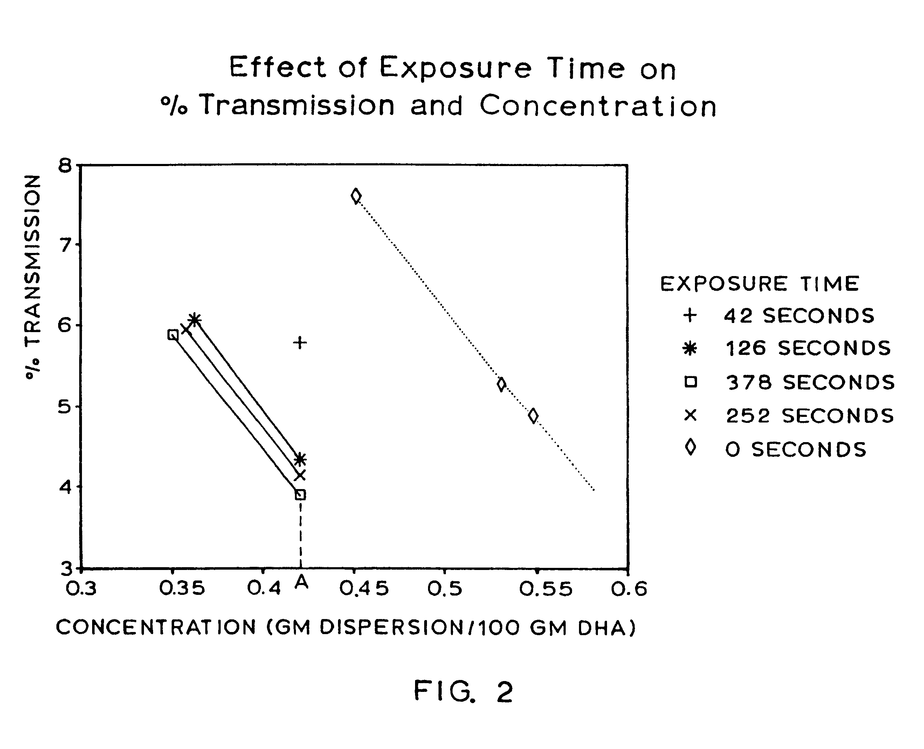

The milled dispersion was diluted with DHA to 2% pigment concentration and circulated continuously at ambient temperature in multiple passes through a loop containing an ultrasonic treatment system commercially obtained from Lewis Corp. of oxford, Conn. as Model RUM-1. Operating frequency was 16-20 kHz; diaphragm length was 22 in (56 cm); gap dimension between opposing diaphragms was 3/8 in (10 cm). At various intervals samples of the 2% dispersion were analyzed for mean particle size distribution and then further diluted with plasticizer (to x-axis values in Fig 2-4) and analyzed for light transmission and chroma. The latter two properties were measured using a Hunter Ultrascan color spectrophotometer programmed to provide light transmission, lightness and chroma values using illuminant C. Measured results are depicted in Figs. 1-4.

By way of explanation, the untreated control in Figs. 2,3 and 4 (shown as "0 seconds" exposure time) had been exposed for 45 min. to high shear mechanical agitation using a cowl mixing blade (F design) which is considered representative of prior art pigment particle size reduction systems. In Fig. 1, the plots for the various "% tiles" represent the actual size or less of various percentages of particles in the sample measured. Thus, after about 80 sec exposure (A in Fig. 1), 50% of the particles in the sample being measured were about 0.55 microns or less (B coordinate) 90% of such particles were about 1.3 microns or less (C coordinate) and 95% were about 1.9 microns or less. "Mean particle size" as used herein means at least about 50% by volume of the particles have the noted size.

INTERPRETATION OF DATA

It is evident from Fig. 1, as expected that pigment particle size is reduced with ultrasonic exposure time. After about 126 sec the maximum reduction to less than 1 micron (actually about 0.99 micron) had occurred with no further reduction during 315 sec further exposure. Mean particle size at 126 sec from Fig. 1 was 0.45 micron. Mean particle size of the cowl blade mixed untreated dispersion was about 1.2 microns. Thus, at about 126 sec the ultimate pigment particle size was achieved and further exposure based on particle size data would not be expected to meaningfully contribute anything.

Fig. 2 shows the effect of exposure time on light transmission through the dispersion of this Example. It illustrates, on one hand, that the longer the ultrasonic exposure, the lower will be transmission. Thus, at a dispersion concentration of about 0.425 (A coordinate), percent transmission decreases from about 5.8 at 42 sec. exposure to 3.8 at 378 sec. Also illustrated is a very significant transmission effect between the cowl blade mixing control (0 sec. exposure) and 42 sec ultrasonic exposure and between 42 and 126 sec ultrasonic exposure. Thus, to provide about 4.2% transmission, 0.425 gm of dispersion/100 gm plasticizer ultrasonically treated for 252 sec. is required, whereas 35% more is required, i.e. about 0.575 gm/100 gm, to give the same transmission when the dispersion was not ultrasonically treated but instead mechanically sheared in a conventional mill. This appreciable reduction in dispersion concentration is significant not only in reducing the cost of manufacture of colored sheet but also haze which is an inherent concern in pigmented interlayer sheet for glazings.

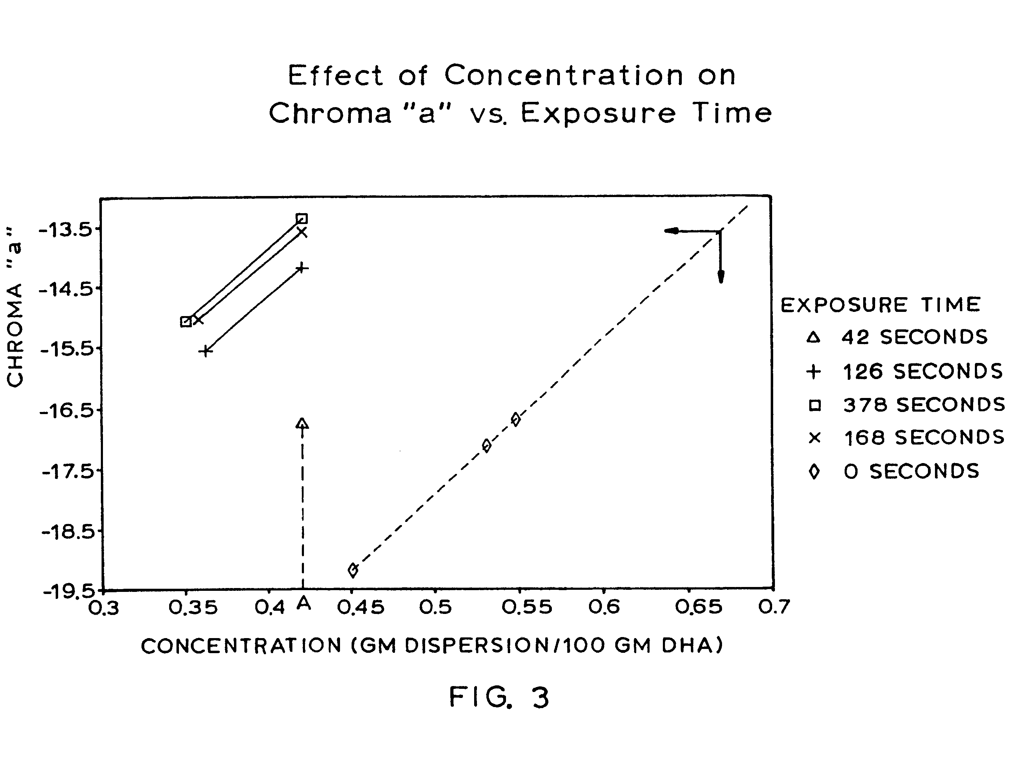

Figs. 3 and 4 illustrate the effect of concentration and exposure time on chroma "a" and chroma "b" of the Example dispersion. As with transmission in Fig. 2, exposure time significantly affects chroma "a" and chroma "b" of the dispersion and therefore of interlayer sheet containing such dispersion. As chroma "a" in Fig. 3 decreases in negative value (i.e. moves vertically upward along the y axis) a decrease occurs in saturation of greenness. Thus, at a typical concentration of 0.425 gm/100 gm, chroma "a" after 42 sec. exposure is about -16.8 which, as compared with -13.8 at 126 sec, indicates that maximum color strength has not yet been achieved. However, from Fig. 1, 126 sec exposure gave the ultimate particle size distribution with 99 percentile being 0.99 micron or less which did not diminish further with further exposure, yet chroma "a" in Fig. 3 is still desirably decreasing meaning a state of maximum color strength of the dispersion has not then been achieved and, though particle size (Fig. 1) is not decreasing, is not achieved until 168 sec exposure. (The difference between 168 sec versus 378 sec chroma "a" is not deemed significant.) This illustrates the effect of ultrasonic treatment on color consistency - i.e. exposure is continued until chroma "a" of the dispersion is maximized and therefore stabilized which occurs when further ultrasonic treatment does not change either chroma "a" or chroma "b" by more then one unit for the particular combination of color pigments being used in a given dispersion. Thus, from Fig. 3, since chroma "a" at 168 sec is -14.2 and at 378 sec is -13.4, the 0.8 unit change being less then one, chroma is considered maximized after about 168 sec and further treatment, for example to 378 sec is optional. Similar results as just described apply to chroma "b" in Fig. 4. Thus, with adequate ultrasonic exposure time, uniform, reproducible color can be consistently expected in successive units of dispersion (and sheet) production.

With respect to dispersion concentration in Figs. 3 and 4, the effect on chroma is even more pronounced than on transmission. Thus, (Fig. 3) a concentration of 0.425 gm dispersion/100 gm DHA ultrasonically treated for 168 sec provides the same color intensity (chroma "a" = -13.7) as would an untreated concentration of about 0.7 gm/100 gm -meaning about 65% more un-treated pigment is required to provide equivalent chroma "a" for the particular pigment blend of this Example.

The results of Figs. 1-4 illustrate that ultrasonic energy not only alters pigment particle size but also unpredictably results in additional property changes beyond normal expectations - i.e. advantageously affects light transmission and chroma even after the ultimate pigment particle size has been achieved. As particularly illustrated in Figs. 3 and 4, by continuing exposure for a sufficient period the maximum strength of color will always be achieved and therefore lot to lot color consistency is significantly improved.

## ULTRASONIC TREATED DISPERSION IN LAMINATES

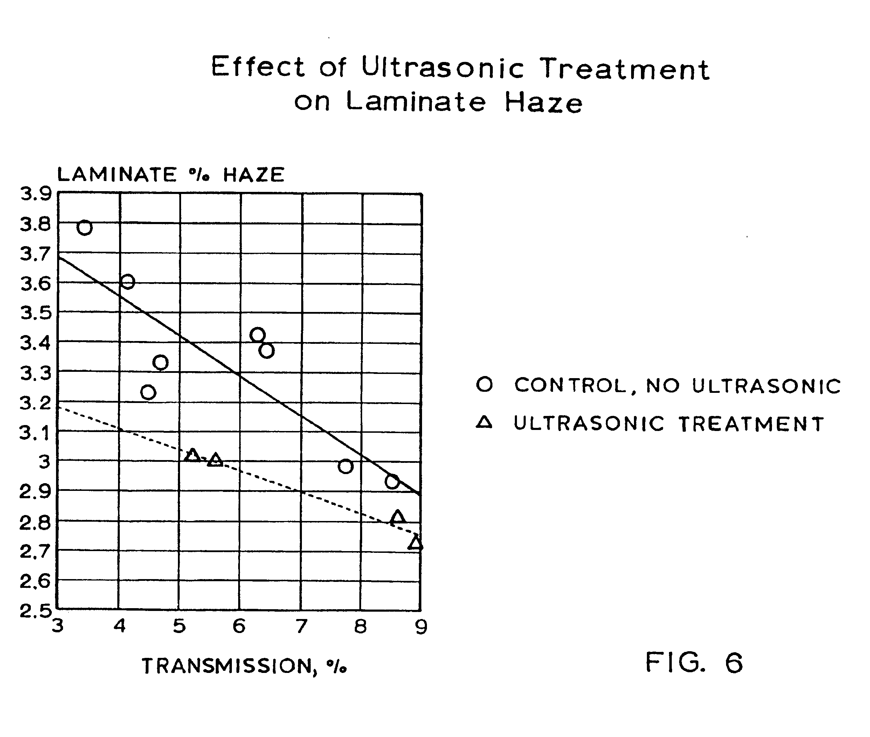

PVB sheet using polyvinyl butyral resin containing 18% vinyl alcohol groups, available from Monsanto Company as Butvar® resin, was prepared using the dispersion described above which had been ultrasonically treated for 126 sec. The sheet formulation was 4.8 parts dispersion (2% solids) per 132 parts resin and plasticizer. The formulation was mechanically mixed and melt extruded through a slot sheet die to form 0.76 mm thick fully colored plasticized PVB interlayer sheet. Glass laminates were prepared (two clear glass sheets with interposed colored interlayer) using conventional laminating conditions of elevated temperature and pressure. The laminates were analyzed for haze and chroma with the results illustrated in Figs. 6-8. Haze was measured according to ASTMD1003-61 using a Hunter D25 optical sensor. Fig. 6 shows that within a 3-9% light transmission range through a laminate, haze of laminates using the pigment dispersion ultrasonically treated for 126 sec. was always lower than with laminates prepared using untreated mechanically sheared pigmented dispersions, at equivalent pigment concentration. Mean particle size of pigment of the treated dispersion was 0.45 micron whereas untreated, mechanically sheared pigment was 1.2 microns. As previously mentioned, this laminate light transmission is representative of that desired in a partially colored sheet having a gradient band for windshield applications.

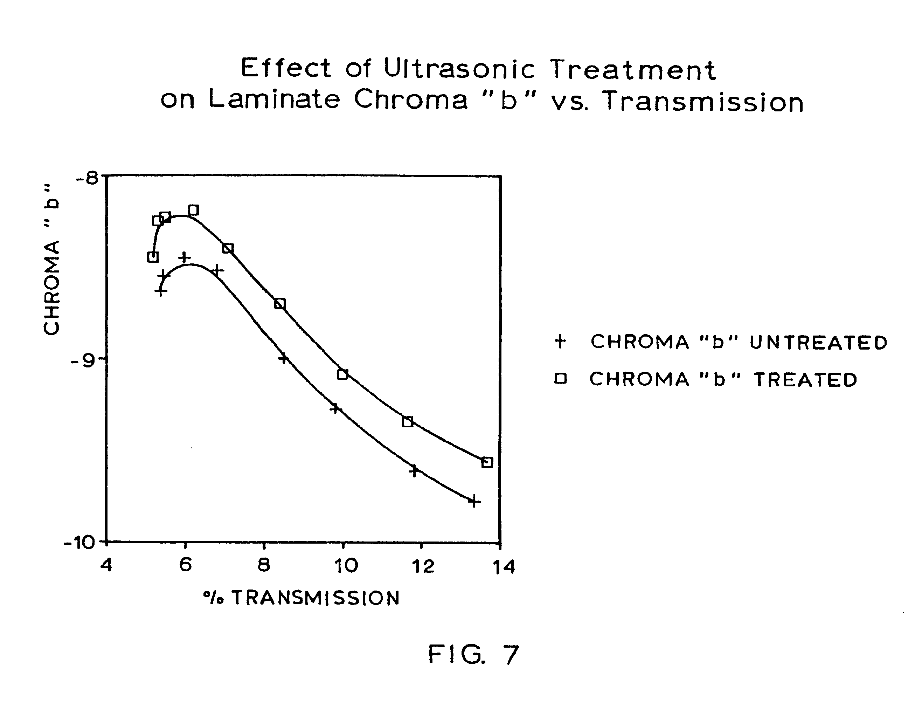

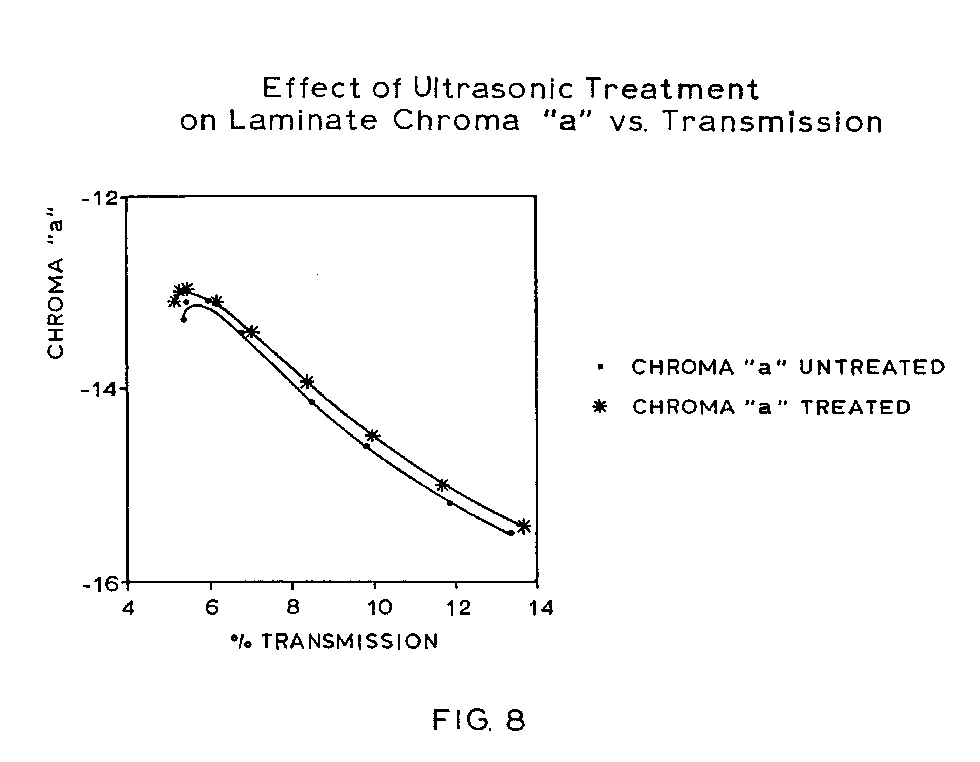

Figs. 7 and 8 show improved results for laminate chroma using treated versus untreated mechanically sheared pigments.

Similar chroma results are predicted at the higher light transmissions usually chosen for architectural applications vis-a-vis laminates prepared using mechanically sheared pigment dispersions - i.e. pigment concentration to achieve a particular chroma value using ultrasonically treated pigment dispersion will be less than required to provide that chroma value using mechanically sheared pigment dispersions.

The preceding description is for illustration only and is not to be taken in a limited sense. Various modifications and alterations will be readily suggested to persons skilled in the art. It is intended, therefore, that the foregoing be considered as exemplary only and that the scope of the invention be ascertained from the scope of the following claims.

## Claims

1. A dispersion of pigment colorant particles in a plasticizer for PVB resin, said dispersion having been exposed to a level of ultrasonic energy sufficient to provide: a) a desired light transmission value and b) a mean pigment particle size less than one micron, the concentration of pigment particles in the dispersion being less than the concentration required to obtain said transmission without exposure to ultrasonic energy.

2. The dispersion of claim 1 wherein the level of ultrasonic energy exposure is at least about 0.04 watt-hr at 16 to 40 k-$H_z$ frequency per cubic centimeter of dispersion containing about 0,1 to about 9% by weight pigment colorants.

3. The dispersion of claim 2 wherein the level of ultrasonic energy is at least about 0.07 watt-hr at 16-20 k-$H_z$ per cubic centimeter of dispersion containing about 0,1 to 3,0% by weight pigment colorants based on the weight of plasticizer and colorants.

4. The dispersion of any of claims 1, 2 or 3 wherein the plasticizer comprises $C_6$-$C_8$ adipate ester.

5. The dispersion of claim 4 wherein the adipate ester comprises hexyl adipate.

6. A process for improving the color consistency of a dispersion of pigment colorant particles in a plasticizer which comprises subjecting a dispersion of color pigment particles in a plasticizer for polyvinyl butyral resin to a level of ultrasonic energy sufficient to maximize the chroma of the dispersion in that the chroma "a" or chroma "b" value of the treated dispersion does not change by more than one unit with further ultrasonic treatment.

7. The process of claim 6 wherein the level of ultrasonic energy is at least about 0.04 watt-hr at 16 to 40 k-$H_z$ frequency per cubic centimeter of dispersion containing about 0.1 to about 9% by weight pigment colorants based on the weight of plasticizer and colorants.

8. The process of claim 7 wherein the level of ultrasonic energy is at least about 0.07 watt-hr at 16-20 k-$H_z$ per cubic centimeter of dispersion containing about 0.1 to 3.0% by weight pigment colorants based on the weight of plasticizer and colorants.

9. The process of claim 8 wherein before subjecting the dispersion to ultrasonic energy, pigment particle size is reduced to less than one micron.

10. The process of any of claims 6, 7, 8 or 9 wherein the plasticizer comprises $C_6$-$C_8$ adipate ester.

11. The process of claim 10 wherein the adipate ester comprises hexyl adipate.

12. In a process for forming transparent, plasticized synthetic thermoplastic resin sheet containing colored pigment which comprises dispersing the pigment in plasticizer, mixing the plasticizer and dispersed pigment with synthetic thermoplastic resin to form a sheet formulation and melt shaping the formulation into transparent sheet, the combination therewith of the step of subjecting the dispersion of plasticizer and pigment to a level of ultrasonic energy capable of providing a predetermined light transmission at a pigment concentration which is less than the concentration of the same pigment required to obtain said transmission through a similar dispersion except that the pigment and plasticizer had not been exposed to ultrasonic energy.

13. The process of claim 12 including the step, before subjecting the dispersion to ultrasonic energy, of reducing pigment particle size to less than one micron.

14. The process of claim 12 wherein said level of ultrasonic energy is at least about 0.04 watt-hr at 16 to 40 k-$H_z$ frequency per cubic centimeter of dispersion containing about 0,1 to about 9% by weight pigment colorants based on the weight of plasticizer and pigment colorants.

15. The process of claim 13 wherein the particle size is reduced before ultrasonic treatment by passage through a grinding mill.

16. The process of any of claims 12, 13, 14 or 15 wherein the ultrasonic energy is provided by a near field system.

17. The process of claim 16 wherein the level of ultrasonic energy is at least about 0.07 watt-hr at 16-20 k-H$_z$ per cubic centimeter of dispersion containing about 0.1 to 3.0% by weight pigment colorants based on the weight of plasticizer and colorants.

18. In the preparation of plasticized polyvinyl butyral sheet wherein one or more plasticizers, one or more pigment colorants and polyvinyl butyral resin are mixed and melt shaped into a fully or partially colored sheet, a method for improving the color consistency of the sheet which comprises subjecting a dispersion of the pigment colorants and one or more plasticizers to be used in said sheet to a level of ultrasonic energy sufficient to maximize the chroma of the dispersion in that the chroma "a" or chroma "b" value of the treated dispersion does not change by more than one unit with further ultrasonic treatment.

19. The method of claim 18 wherein the level of ultrasonic energy is at least about 0.04 watt-hr at 16 to 40 k-Hz frequency per cubic centimeter of dispersion containing about 0.1 to about 9% by weight pigment colorants based on the weight of plasticizer and colorants.

20. The method of claim 19 wherein plasticizer, colorants and resin are extrusion mixed.

21. The method of claim 20 wherein the sheet is entirely colored.

22. The method of claim 20 wherein the sheet is clear and has a color band extending along one side adjacent the edge.

23. The method of any of claims 18, 19, 20, 21 or 22 wherein melt shaping is by extrusion through a slot die.

24. The method of claim 23 wherein the level of ultrasonic energy is at least about 0,07 watt-hr at 16 to 20 k-H$_z$ per cubic centimeter of dispersion containing about 0,1 to 3.0% by weight pigment colorants based on the weight of plasticizer and colorants.

25. The method of claim 23 wherein the polyvinyl butyral contains about 15 to 25 weight % hydroxyl groups calculated as polyvinyl alcohol.

26. Colored, transparent, synthetic thermoplastic resin sheet containing plasticizer and dispersed pigment particles having a mean particle size less than one micron, said particles having been exposed to a level of ultrasonic energy sufficient to provide a chroma value in a laminate of said sheet with glass at between about 2 to 86% light transmission at a pigment concentration in the sheet which is less than the pigment concentration to provide said chroma value in a laminate with glass of plasticized thermoplastic resin sheet containing mechanically sheared pigment particles which had not been ultrasonically treated.

27. The sheet of claim 26 wherein the resin is polyvinyl butyral.

28. The sheet of claim 27 wherein the level of ultrasonic energy is at least about 0.04 watt-hr at 16 to 40 k-Hz frequency per cubic centimeter of dispersion containing about 0.1 to about 9% by weight pigment colorants based on the weight of plasticizer and colorants.

29. The sheet of claim 27 which is entirely colored with pigments which had been exposed to said ultrasonic energy.

30. The sheet of claim 27 wherein the pigment particles form a gradient color band along one margin adjacent the edge, the remainder of the sheet being clear.

31. The sheet of any of claims 26, 27, 28, 29 or 30 wherein the level of ultrasonic energy is at least about 0.07 watt-hr at 16 to 20 k-H$_z$ per cubic centimeter of dispersion containing about 0,1 to 3,0% by weight pigment colorants based on the weight of plasticizer and colorants.

32. The sheet of claim 31 wherein the mean pigment particle size is less than 0.5 micron.

33. The sheet of claim 31 wherein the polyvinyl butyral contains about 15 to 25 weight % hydroxyl groups calculated as polyvinyl alcohol.

34. The sheet of claim 33 wherein the plasticizer comprises $C_6$ - $C_8$ adipate ester.

# Ultrasonic Exposure vs. Particle Size

SIZE DISTRIBUTION
+    50% TILE
✳    90% TILE
□    95% TILE

FIG. 1

# Effect of Exposure Time on % Transmission and Concentration

FIG. 2

# Effect of Concentration on Chroma "a" vs. Exposure Time

EXPOSURE TIME
△ 42 SECONDS
+ 126 SECONDS
□ 378 SECONDS
× 168 SECONDS
◇ 0 SECONDS

FIG. 3

EP 0 459 967 A2

# Effect of Concentration on
# Chroma "b" vs. Exposure Time

**EXPOSURE TIME**

△  42 SECONDS

+  126 SECONDS

□  378 SECONDS

×  252 SECONDS

◊  0 SECONDS

FIG. 4

EP 0 459 967 A2

FIG. 5

EP 0 459 967 A2

# Effect of Ultrasonic Treatment on Laminate Haze

**FIG. 6**

O CONTROL, NO ULTRASONIC

△ ULTRASONIC TREATMENT

EP 0 459 967 A2

Effect of Ultrasonic Treatment
on Laminate Chroma "b" vs. Transmission

+ CHROMA "b" UNTREATED

□ CHROMA "b" TREATED

FIG. 7

## Effect of Ultrasonic Treatment
## on Laminate Chroma "a" vs. Transmission

- CHROMA "a" UNTREATED
* CHROMA "a" TREATED

FIG. 8

EP 0 459 967 A2